Europäisches Patentamt

European Patent Office

Office européen des brevets

(11) Numéro de publication: **0 227 568**
**A1**

# DEMANDE DE BREVET EUROPEEN

(21) Numéro de dépôt: 86440101.3

(22) Date de dépôt: 20.11.86

(51) Int. Cl.⁴: **A 21 B 1/08**

(30) Priorité: 21.11.85 FR 8517485

(43) Date de publication de la demande:
**01.07.87 Bulletin 87/27**

(84) Etats contractants désignés:
**AT BE CH DE ES GB IT LI LU NL SE**

(71) Demandeur: **BONGARD, S.A.**
**56, rue Jean Giraudoux**
**F-67035 Strasbourg (FR)**

(72) Inventeur: **Schwender, Carlo**
**Nachtigallenweg 10**
**D-3253 Hessisch Oldendorf 1 (DE)**

**Gross, Reinhart**
**Wichernstr. 17**
**D-6724 Dudenhofen b. Speyer (DE)**

(74) Mandataire: **Nuss, Pierre**
**10, rue Jacques Kablé**
**F-67000 Strasbourg (FR)**

(54) **Four de boulangerie, pâtisserie, ou analogue.**

(57) La présente invention concerne un four de boulangerie, pâtisserie, ou analogue.

Four caractérisé en ce qu'il comporte un noyau à tubes vapeur (1) formant des chambres de cuisson (2) et un foyer (3) combinés avec un récupérateur d'énergie (5) qui permet simultanément la production de buée pour les chambres (2), le refroidissement et le séchage des gaz de combustion et la neutralisation des condensats.

**Description**

Four de boulangerie, pâtisserie, ou analogue

La présente invention concerne le domaine de la fabrication des fours de boulangerie, pâtisserie, ou analogue, en particulier les fours à tubes vapeur à soles fixes.

Actuellement, les fours à tubes vapeur sont équipés d'un foyer dans lequel est échangée l'énergie utile aux chambres de cuisson et aux appareils à buée placés dans ces chambres et nécessaires au processus de cuisson.

Les gaz de combustion sortent du foyer à une température comprise entre 320° C et 340° C pour une température des chambres de cuisson de l'ordre de 260° C, de sorte qu'il se produit une perte d'énergie comprise entre 15 % et 20 %. En outre, 20 % à 25 % de l'énergie échangée est utilisée par les appareils à buée.

Pour l'évacuation de ces gaz à très haute température il est nécessaire de construire, simultanément avec chaque four, une cheminée traditionnelle avec toutes ses contraintes techniques.

Il a été tenté d'abaisser la température des gaz rejetés par récupération d'énergie, mais, cependant, elle est limitée par un seuil. En effet, il faut impérativement que les gaz rejetés dans la cheminée restent à une température telle que le point de rosée ne soit pas atteint, même en hiver, et ceci en aucun point, afin d'éviter des dégâts dûs à la condensation et à l'agressivité des condensats.

La présente invention a pour but de pallier ces inconvénients.

Elle a, en effet, pour objet, un four de boulangerie, pâtisserie, ou analogue, caractérisé en ce qu'il comporte un noyau à tubes vapeur formant des chambres de cuisson et un foyer combinés avec un récupérateur d'énergie qui permet simultanément la production de buée pour les chambres de cuisson, le refroidissement et le séchage des gaz de combustion et la neutralisation des condensats.

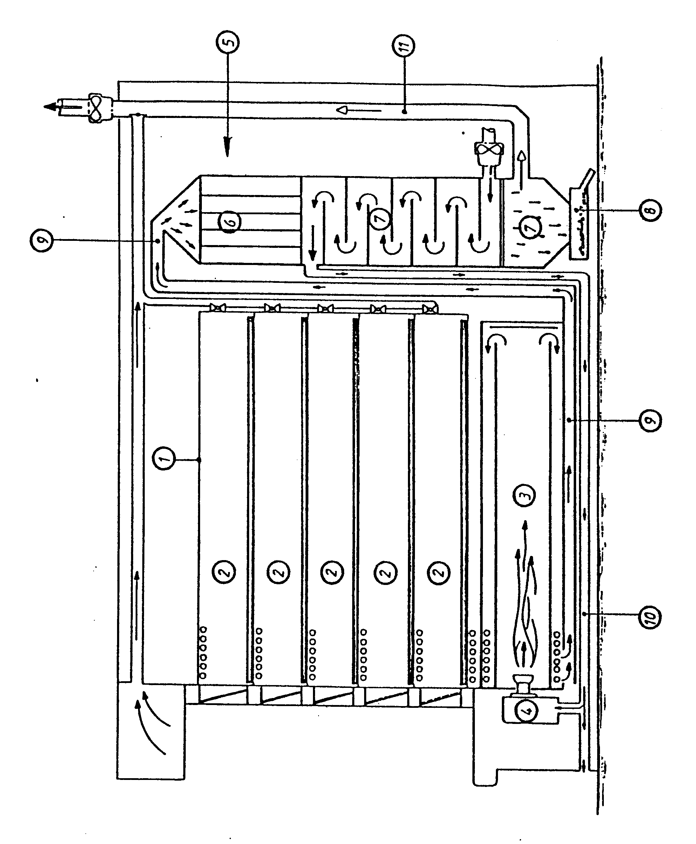

L'invention sera mieux comprise grâce à la description ci-après, qui se rapporte à un mode de réalisation préféré, donné à titre d'exemple non limitatif, et expliqué avec référence au dessin schématique annexé, dont la figure unique est une vue en coupe transversale d'un four conforme à l'invention.

Comme le montre le dessin annexé, le four de boulangerie, pâtisserie, ou analogue, est constitué par un noyau à tubes vapeur 1 formant les chambres de cuisson 2, et par un foyer 3 comportant un brûleur 4. Conformément à l'invention, les éléments précités du four sont combinés avec un récupérateur d'énergie 5 permettant simultanément de produire de la buée pour les chambres 2, de refroidir et, de sécher les gaz de combustion et de neutraliser les condensats.

Le récupérateur d'énergie 5 est relié à la sortie des gaz brûlés du foyer 3 au moyen d'un conduit 9, et est constitué par un générateur de vapeur 6 relié à sa partie supérieure au conduit 9 et dont la vapeur est amenée, de manière connue, aux chambres de cuisson 2, et par un ensemble refroidisseur et condenseur 7 monté sous la partie inférieure du générateur 6 et relié à sa partie inférieure à une chambre 8 de neutralisation des condensats, cet ensemble réchauffant, à contre-courant, l'air comburant alimentant le brûleur 4 à travers un conduit 10 muni d'une dérivation d'évacuation de l'air en excédent, la partie inférieure de cet ensemble 7 étant reliée, en outre, à un conduit d'évacuation 11.

Les condensats sont neutralisés dans la chambre 8 de manière connue, à savoir, par exemple, par réception sur des granulats basiques neutralisant l'acidité des condensats avant rejet.

Ainsi, l'énergie récupérée par le récupérateur 5 à la sortie du conduit 9 sert tout d'abord à produire, dans le générateur 6, la buée nécessaire au processus de cuisson dans les chambres 2, puis à préchauffer, dans l'ensemble 7, l'air alimentant le brûleur 4 du foyer 3 par circulation à contre-courant de cet air. Ainsi, les gaz sortant à la base du récupérateur 5 dans le conduit 11 sont à basse température et secs et épurés du fait du passage dans l'ensemble refroidisseur et condenseur 7 et peuvent être évacués dans un conduit ordinaire sans nécessiter de cheminée. Ainsi, toute l'énergie récupérée est immédiatement réutilisée dans le four.

Selon une variante de réalisation de l'invention, non représentée au dessin annexé, le noyau 1 est sous forme d'un noyau à recyclage d'air et le foyer 3 est remplacé par un échangeur de chaleur pourvu d'un récupérateur d'énergie 5.

Conformément à une autre variante de réalisation de l'invention, non représentée au dessin annexé, le noyau 1 peut également être réalisé sous forme d'un noyau de four à recyclage de gaz de combustion ou d'un noyau de four à fluide caloporteur.

Grâce à l'invention, il est possible de réaliser un four de boulangerie, pâtisserie, ou analogue, permettant, d'une part, une économie d'énergie et de frais d'installation, et, d'autre part, d'éviter tout rejet nocif.

Bien entendu, l'invention n'est pas limitée au mode de réalisation décrit et représenté au dessin annexé. Des modifications restent possibles, notamment du point de vue de la constitution des divers éléments ou par substitution d'équivalents techniques, sans sortir pour autant du domaine de protection de l'invention.

**Revendications**

1. Four de boulangerie, pâtisserie, ou analogue, caractérisé en ce qu'il comporte un noyau à tubes vapeur (1) formant des chambres de cuisson (2) et un foyer (3) combinés avec un récupérateur d'énergie (5) qui permet simultanément la production de buée pour les chambres (2), le refroidissement et le séchage des gaz de combustion et la neutralisation des condensats.

2. Four, suivant la revendication 1, caractérisé en ce que le récupérateur d'énergie (5) est relié à la sortie des gaz brûlés du foyer (3) au moyen d'un conduit (9), et est constitué par un générateur de vapeur (6) relié à sa partie supérieure au conduit (9) et dont la vapeur est amenée, de manière connue, aux chambres de cuisson (2), et par un ensemble refroidisseur et condenseur (7) monté sous la partie inférieure du générateur (6) et relié à sa partie inférieure à une chambre (8) de neutralisation des condensats, cet ensemble (7) réchauffant, à contre-courant, l'air comburant alimentant le brûleur (4) à travers un conduit (10) muni d'une dérivation d'évacuation de l'air en excédent, la partie inférieure de cet ensemble (7) étant reliée, en outre, à un conduit d'évacuation (11).

3. Four, suivant la revendication 1, caractérisé en ce que le noyau (1) est sous forme d'un noyau à recyclage d'air et le foyer (3) est remplacé par un échangeur de chaleur pourvu d'un récupérateur d'énergie (5).

4. Four, suivant la revendication 1, caractérisé en ce que le noyau (1) est sous forme d'un noyau de four à recyclage de gaz de combustion ou d'un noyau de four à fluide caloporteur.

0227568

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl.4) |
|---|---|---|---|
| A | FR-A-2 358 106 (A. ORTH)<br>* En entier * | 1 | A 21 B 1/08 |
| | --- | | |
| A | GB-A-2 117 893 (R.C. BRAUER)<br>* Page 1, ligne 33 - page 2, ligne 60 * | 1 | |
| | --- | | |
| A | US-A-4 286 975 (I.C. WHITELEY) | | |
| | --- | | |
| A | GB-A- 621 397 (BAKOVENBOUW VOORHEEN H.P. DEN BOER N.V.) | | |
| | ----- | | |

**DOMAINES TECHNIQUES RECHERCHES (Int. Cl.4)**

A 21 B
F 28 D

Le présent rapport de recherche a été établi pour toutes les revendications

| Lieu de la recherche | Date d'achèvement de la recherche | Examinateur |
|---|---|---|
| LA HAYE | 23-02-1987 | FRANKS N.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82